# EUROPEAN PATENT SPECIFICATION

(11) **EP 1 762 463 B1**
(45) Date of publication and mention of the grant of the patent: **09.05.2007**
(21) Application number: 05019396.0
(22) Date of filing: 07.09.2005
(51) Int. Cl.: B62D 3/12, F16D 3/84, F16J 3/04

(54) **Steering boot**
Lenkmanschette
Soufflet de direction

(43) Date of publication of application: 14.03.2007
(73) Proprietor: Carl Freudenberg KG, 69469 Weinheim (DE)
(72) Inventor: Suzuki, Tatsuo, Haibara-gun Shizuoka 421-0532 (JP); Matsumoto, Naoki, Haibara-gun Shizuoka 421-0532 (JP); Okazaki, Noriyuki, Haibara-gun Shizuoka 421-0532 (JP); Suzuki, Takashi, Haibara-gun Shizuoka 421-0532 (JP)

(56) References cited:
- EP-A- 0 479 488
- EP-A- 0 565 344
- DE-A1- 4 330 182
- US-A1- 2002 149 158
- US-A1- 2003 057 652

## Description

### BACKGROUND OF THE INVENTION

### Field of the Invention

The present invention relates to a steering boot covering a coupling portion between a steering rack and a tie rod in a motor vehicle.

### Description of the Related Art

A rack-and-pinion steering apparatus of a motor vehicle is structured as well known such that a steering rack is moved via a pinion gear on the basis of a rotational operation of a steering wheel by a driver, and tie rods coupled to both right and left ends thereof via a ball joint are oscillated with respect to a steering rack, thereby swiveling a tire wheel in an optional direction.

The coupling portion between both the end portions of the steering rack and the tie rod is covered by a steering boot in such a manner as to prevent a muddy water, a dust or the like from making an intrusion into a ball joint portion or prevent a grease from flowing out. As a typical prior art of this kind of steering boot, there is a structure disclosed in Japanese Unexamined Patent Publication No. 61-109967.

The steering boot is formed in a bellows shape in which annular crest parts and trough parts are alternately formed, by a thermoplastic resin, in such a manner as to follow to a reciprocating motion in an axial direction of the steering rack and an oscillating motion of the tie rod. Further, in accordance with the prior art, as described in Japanese Unexamined Patent Publication No. 61-109967, each of the crest parts and each of the trough parts are arranged on a virtual cylindrical surface, and are formed approximately at a uniform thickness.

The patent application US 2002/1 149 158 A1 shows a sealing boot for a rack according to the preamble of claim 1 including a tubular body structure of flexible seal material formed with a plurality of convolutes and terminating at each open end in a neck. An inner sealing surface of at least one of the necks is formed with a plurality of annular, alternating grooves and ribs.

### SUMMARY OF THE INVENTION

However, in accordance with the conventional steering boot, particularly in use under a high temperature environment, there is a case that a part of the expanded and contracted steering boot is caught on a socket portion of the ball joint at a time of the reciprocating motion of the steering rack and the oscillating motion of the tie rod. Fig. 8 is an explanatory view showing a deformed state of the conventional steering boot. Reference numeral 101 in the drawing denotes a steering boot, reference numeral 102 denotes a steering rack, reference numeral 103 denotes a tie rod coupled to the steering rack 102 via a ball joint 104, and reference numeral 105 denotes a rack housing supporting the steering rack 102 so as to be slidable in axial direction. A large-diameter side end portion 101a of the steering boot 101 is outside inserted and fixed to an outer peripheral surface of the rack housing 105 in a sealing manner, and a small-diameter side end portion 101b is outside inserted and fixed to an outer peripheral

surface of the tie rod 103 in a sealing manner.

Further, since all of radii of the chevrons and the valleys of the steering boot 101 are equal, if an internal pressure is increased under a high temperature environment on the basis of a volume expansion of an air closed in an inner periphery of the steering boot 101, the steering boot 101 is exposed to a bending deformation as shown in Fig. 8 at a time of the following motion to the displacement in the axial direction of the steering rack 102 and the oscillation of the tie rod 103 in accordance therewith. Accordingly, a portion A in which the crest parts and the valley parts are contracted is generated in an intermediate portion in the axial direction, and a trough part 101c in the portion is close to an outer peripheral surface of the steering rack 102.

Accordingly, if the steering rack 102 is displaced in the axial direction as shown by an arrow B under this state, a socket 104a of the ball joint 104 in an end portion thereof interferes with the trough part 101c of the contracted portion so as to be caught thereon. Further, there is a risk that a bore is formed in the trough part 101c of the steering boot 101 of the steering boot 101 is broken as well as an abnormal noise is generated due to the catch as mentioned above and a vibration is generated at a time when the catch comes off.

The present invention is made by taking the points mentioned above into consideration, and a technical object of the present invention is to provide a steering boot having no risk that the steering boot exposed to a high temperature atmosphere is broken because a trough part is caught on a socket of a ball joint at a time when a bellows part is exposed to a bending deformation on the basis of an oscillation of a tie rod.

As a means for effectively solving the technical problem mentioned above, in accordance with a first aspect of the present invention, there is provided a steering boot comprising:
a bellows part in which annular crest parts and trough parts are formed alternately, a first attachment part formed at one end of the bellows part to be tightly fixed to an outer peripheral surface of a rack housing where a steering rack is inserted through movably in an axial direction, and a second attachment part formed at the other end of the bellows part to be tightly fixed to an outer peripheral surface of a tie rod jointed oscillatably to the steering rack via a ball joint, wherein the bellows part is formed relatively thinner in a portion than in the other portions, on the outer peripheral side of the ball joint.

In accordance with this structure, the steering boot is relatively compressed in a portion forming an outer peripheral side of the ball joint on the basis of an increase of an internal pressure, and is relatively expanded in the other portions. Accordingly, since a bending deformation of the bellows portion following to the oscillation of the tie rod around the ball joint is mainly increased in the outer peripheral side of the ball joint, and an inner periphery of a portion displacing to an axis of the steering rack while contracting on the basis of the bending is positioned in the outer periphery of the ball joint, the catch on the end portion of the ball joint is not generated.

Further, in accordance with a second aspect of the present invention, there is provided the steering boot of the first aspect, wherein the outer diameter of the crest part and the inner diameter of the trough part become gradually smaller from the end part on the first attachment part side to the end part of the second attachment part side.

In accordance with this structure, since the pressure receiving diameter at a time when the internal pressure is increased is relatively larger toward the position close to the end portion of the first attachment part side in which the outer diameter of the crest part and the inner diameter of the trough part are large, and the pressure receiving diameter at a time when the internal pressure is increased becomes relatively smaller toward the position close to the end portion in the second attachment part side, the expanding force of the steering boot on the basis of the increase of the internal pressure becomes relatively larger in the first attachment part side (the rack housing side), and becomes relatively smaller in the second attachment part side (the tie rod side). Accordingly, since the bellows part of the steering boot is expanded in the first attachment part side, and is contracted in the second attachment part side, the movement in the diametrical direction is inhibited in the portion close to the first attachment part on the basis of the expansion, and the catch on the end portion of the ball joint is not generated.

Further, in accordance with a third aspect of the present invention, there is provided the steering boot of the second aspect, wherein the inclination angle of a conical face passing through an arbitrary crest part and the crest part adjacent to the smaller diameter side thereof or a conical face passing through an arbitrary trough and a trough adjacent to the smaller diameter side thereof in respect to the axial center is made equal or inferior to 30 degrees.

In this structure, the angle θ is defined to be equal or inferior to 30 degrees because the torsional stress of the steering boot becomes too large at a time when the tie rod is twisted for regulating the toe-in angle of the tire wheel if the angle is more than 30 degrees, so that the durability is lowered.

In accordance with the steering boot on the basis of the first aspect of the present invention, since the catch on the end portion of the ball joint is not generated at the deforming time following to the oscillation of the tie rod, it is possible to prevent an abnormal noise and a vibration from being generated, and it is possible to prevent the steering boot from being bored and broken.

In accordance with the steering boot on the basis of the second aspect of the present invention, since the bellows part is expanded in the first attachment part side and is contracted in the second attachment part side at a time when the internal pressure is increased, the movement in the diametrical direction is inhibited in the portion close to the first attachment part on the basis of the expansion, and it is possible to further effectively prevent the catch on the end portion of the ball joint.

In accordance with the steering boot on the basis of the third aspect of the present invention, since the generation of the torsional stress can be inhibited, an excellent durability can be secured in addition to the effect obtained by the second aspect.

### BRIEF DESCRIPTION OF THE DRAWINGS

Fig. 1 is an explanatory view showing a relation between a cross section of a loaded state and a thickness and showing a steering boot in accordance with a first aspect of the present invention;
Fig. 2 is an explanatory view showing a deforming state of a thin crest part on the basis of an internal pressure of a steering boot in accordance with the aspect in Fig. 1;
Fig. 3 is a cross sectional view showing a loaded state and a bending state of the steering boot in accordance with the aspect in Fig. 1;
Fig. 4 is a cross sectional view of an unloaded state showing a steering boot in accordance with a second aspect of the present invention;
Fig. 5 is a partly enlarged cross sectional view of the steering boot in accordance with the aspect in Fig. 4;
Fig. 6 is a cross sectional view showing an internal pressure applying state in a loaded state of the steering boot in accordance with the aspect in Fig. 4;
Fig. 7 is a cross sectional view showing the internal pressure applying state and a bending state in the loaded state of the steering boot in accordance with the aspect in Fig. 4; and
Fig. 8 is an explanatory view showing a deformed state of a conventional steering boot.

### DESCRIPTION OF THE PREFERRED EMBODIMENT

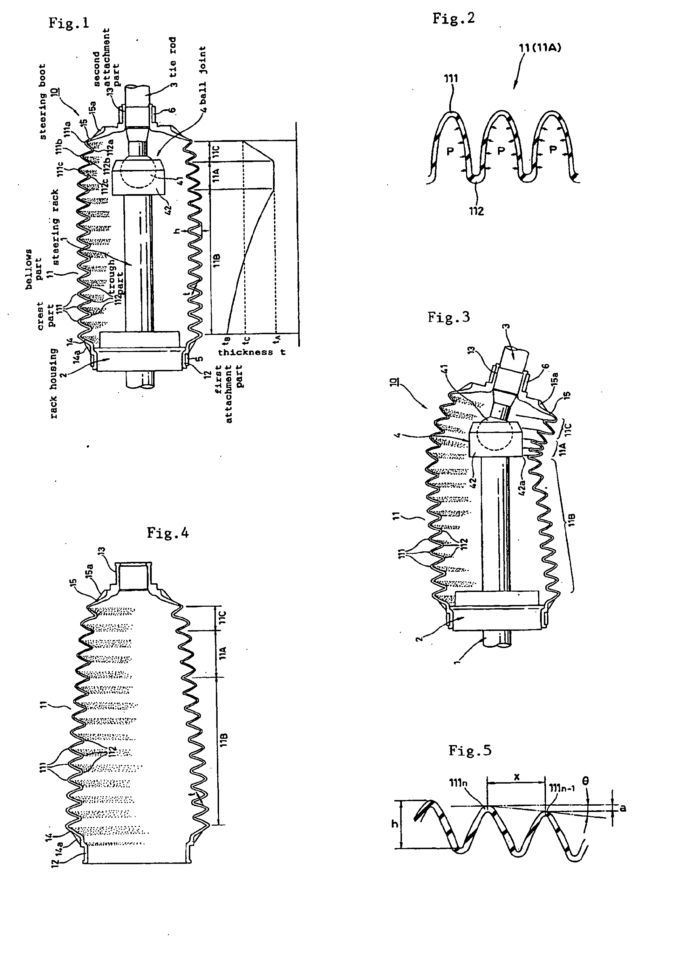

A description will be in detail given below of a preferable embodiment of a steering boot in accordance with the present invention with reference to the accompanying drawings. First, Fig. 1 is an explanatory view showing a relation between a cross section of a loaded state and a thickness and showing a steering boot in accordance with a first aspect of the present invention, Fig. 2 is an explanatory view showing a deforming state of a thin crest part on the basis of an internal pressure in the aspect in Fig. 1, and Fig. 3 is a cross sectional view showing a loaded state and a bending state of the steering boot in accordance with the aspect in Fig. 1.

First, in Fig. 1, reference numeral 1 denotes a steering rack reciprocated in an axial direction via a pinion gear on the basis of a rotational operation of a steering wheel (not shown), reference numeral 2 denotes a rack housing through which the steering rack 1 is inserted, and reference numeral 3 denotes a tie rod coupled to an end portion (both ends) of the steering rack 1 via a ball joint 4. The ball joint 4 is constituted by a ball part 41 firmed in an end portion of the tie rod 3, and a socket 42 formed in an end portion of the steering rack 1 and holding the ball part 41 so as to freely roll.

A steering boot 10 in accordance with this aspect is formed by a thermoplastic resin, and is provided with a bellows part 11 in which annular crest parts 111 and trough parts 112 are alternately formed, a first attachment part 12 formed in one end of the bellows part 11, fastened to an outer peripheral surface of the rack housing 2 by a metal band 5 and fixed in an sealing manner, and a second attachment part 13 formed in the other end of the bellows part 11, fastened to an outer peripheral surface of the tie rod 3 by a metal band 6 and fixed to a sealing manner. In other words, in a loaded state in Fig. 1, the 10 surrounds so as to seal a portion from the rack housing 2 to a portion near an end portion of the tie rod 3 via an outer periphery of a joint portion between the steering rack 1 and the tie rod 3 by the ball joint 4.

The bellows part 11 is structured such that an outer diameter of each of the crest parts 111 and an inner diameter of each of the trough parts 112 are uniform with each other in a region except the first to third stages of crest parts 111a to 111c and the first to third stages of trough parts 112a to 112c from the second attachment part 13 side, and accordingly in this region, a rolling height h of the crest part 111 and the trough part 112 is uniform. In other words, in a state in Fig. 1 in which the steering rack 1 and the tie rod 3 are arranged on the same axis, an envelope curve passing through each of the crest parts 111 and an envelope curve passing through each of the trough parts 112 become in parallel to an axis of the steering rack 1. The first to third stages of crest parts 111a to 111c and the first to third stages of trough parts 112a to 112c are formed so as to be gradually smaller in diameter such that the first stage forms the smallest diameter.

A thickness t of the bellows part 11 is relatively thinner than the other portions in the portion 11A forming the outer peripheral side of the ball joint 4. In detail, as a distribution of the thickness t is shown by a graph in Fig. 1, the thickness t of the bellows part 11 is changed such that the thickness t becomes smallest (tA) in the portion 11A forming the outer peripheral side of the ball joint 4, and becomes gradually thicker toward the first attachment part 12 side in the portion 11B closer to the first attachment part 12 side than the portion 11A, and the thickness t is changed such that the thickness becomes gradually thicker toward the second attachment part 13 side in the portion 11C closer to the second attachment part 13 side than the portion 11A. Further, a thickness tB in an end portion of the first attachment part 12 side is larger than a thickness tC in an end portion of the second attachment part 13 side.

Further, end walls 14 and 15 corresponding to both ends in an axial direction of the bellows part 11 respectively have a plurality of ribs 14a and 15a in a circumferential direction, thereby being reinforced.

In the structure mentioned above, the steering boot 10 seals a portion from the rack housing 2 to the portion near ten end portion of the tie rod 3 via an outer periphery of a joint portion between the steering rack 1 and the tie rod 3 by the ball joint 4, thereby protecting the ball joint 4 and the periphery thereof from a muddy water and a dust.

In this case, if a high temperature atmosphere is formed by a radiant heat from a road surface or the like, an internal pressure of the steering boot 10 becomes higher on the basis of an expansion of an air within the steering boot 10. The internal pressure uniformly applies to all the portions in the inner surface of the bellows part 11, however, the internal pressure is applied in the portion in which the thickness t is large in such a manner as to open each of the crest parts 111 in the axial direction, however, if the internal pressure P is applied to the portion in which the thickness t is small, as shown in Fig. 2, a portion close to the outer periphery bulges on the basis of the deflection of the wall surface of the crest part 111, and the trough part 112 side is deformed inversely such that an angle becomes smaller. Accordingly, the portion 11A positioned in the outer periphery of the ball joint 4 is relatively compressed due to the smallest thickness tA, and the other thicker portions 11B and 11C are relatively expanded.

Further, if a driver of a vehicle turns the steering wheel, whereby the tie rod 3 is angularly displaced around the ball part 41 of the ball joint 4 while the steering rack 1 moves in the axial direction, the bellows part 11 in the steering boot 10 is deformed as shown in Fig. 3 between the first attachment part 12 fixed to the rack housing 2 and the second attachment part 13 displacing together with the tie rod 3. In other words, the bellows part 11 is largely bent in the portion 11A in which the thickness t becomes thinnest, in the outer peripheral side of the ball joint 4.

Accordingly, the thinnest portion 11A in the bellows part 11 is largely exposed to the compression in an inner side of the bending. Further, an inner periphery in the compression side in the thin portion 11A is close to or brought into contact with the outer peripheral surface of the socket 42 of the ball joint 4 accompanying with the deformation mentioned above, and the portion 11B in the first attachment part 12 side is inhibited from being displaced in the diametrical direction due to the relatively large expanding force in the axial direction. Accordingly, there is no risk that the portion 11B closer to the first attachment part 12 side than the ball joint 4 enters into the inner peripheral side from the socket 42 so as to be caught on the corner portion 42a.

Further, the internal pressure of the steering boot 10 is applied so as to get down the end walls 14 and 15 in both ends in the axial direction to the outer side, however, since the end walls 14 and 15 are formed thicker than the bellows part 11, and is reinforced by ribs 14a and 15a, it is possible to prevent the end walls 14 and 15 from getting down due to the internal pressure so as to be damaged by the interference of the metal bands 5 and 6 with a thread portion (not shown) or the like.

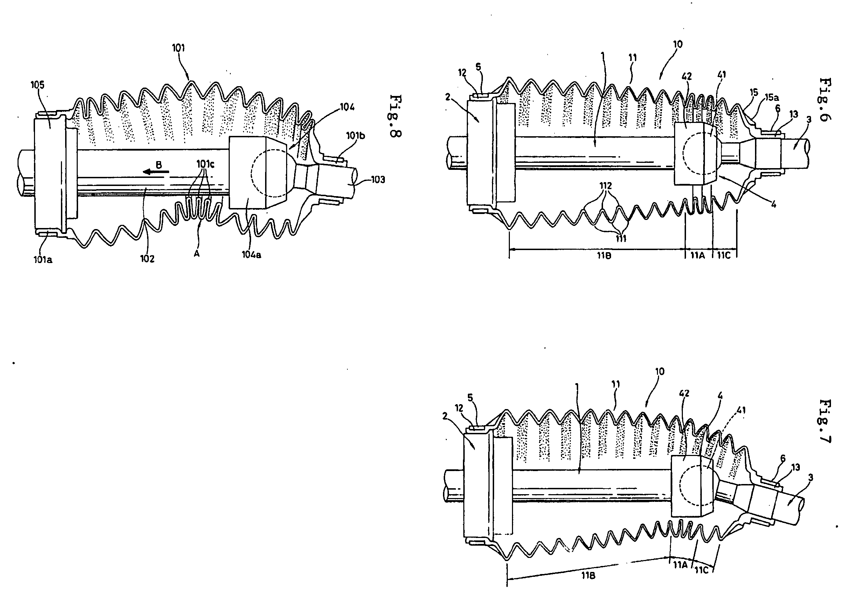

Next, Fig. 4 is a cross sectional view of an unloaded state showing a steering boot in accordance with a second aspect of the present invention, Fig. 5 is a partly enlarged cross sectional view of the steering boot in accordance with the aspect in Fig. 4, Fig. 6 is a cross sectional view showing an internal pressure applying state in a loaded state of the steering boot in accordance with the aspect in Fig. 4, and Fig. 7 is a cross sectional view showing the internal pressure applying state and a bending state in the loaded state of the steering boot in accordance with the aspect in Fig. 4.

The steering boot 10 in accordance with this aspect is formed by a thermoplastic resin, and is provided, as shown in Fig. 4, with the bellows part 11 in which the annular crest part 111 and the trough part 112 are alternately formed, the first attachment part 12 formed in one end of the bellows part 11, and the second attachment part 13 formed in the other end of the bellows 11. This aspect is different from the previously described first aspect in a point that an outer diameter of the crest part 111 in the bellows part 11 and an inner diameter of the trough part 112 are gradually smaller from the end portion in the first attachment part 12 side toward the end portion in the second attachment part 13 side.

In detail, as shown in Fig. 5, an angle θ of incline which a conical surface passing through an outer diameter of an n stage of crest part 111ₙ and an outer diameter of an (n-1) stage of crest part 111ₙ₋₁ adjacent in a small-diameter side forms with respect to an axis is set to be equal to or less than 30 degrees. In other words, on the assumption that the difference in diameter between the crest parts 111ₙ and 111ₙ₋₁ is set to a, and a pitch is set to x, the values a and x are defined in such a manner that a formula tan⁻¹ (a/x) is between 0 and 30 degrees. Further, a rolling height h between the crest part 111 and the trough part 112 is uniform, and accordingly, the trough part has the same relation as the crest part 111.

The thickness t of the bellows part 11 is distributed in the same manner as the graph in the previously explained Fig. 1, that is, the thickness t is changed such that the thickness t becomes thinnest in the portion 11A forming the outer peripheral side of the ball joint, and becomes gradually thicker toward the first attachment part 12 side in the portion 11B closer to the first attachment part 12 side than the portion 11A, and the thickness t is changed such that the thickness becomes gradually thicker toward the second attachment part 13 side in the portion 11C closer to the second attachment part 13 side than the portion 11A. Further, a thickness in an end portion of the first attachment part 12 side is larger than a thickness in an end portion of the second attachment part 13 side.

The first attachment part 12 of the steering boot 10 having the structure mentioned above is fastened to the outer peripheral surface of the rack housing 2 by the metal band 5, whereby the steering boot 10 is fixed in a sealing manner, as shown in Fig. 6, and the second attachment part 13 is fastened to the outer peripheral surface of the tie rod 3 by the metal band 6, whereby the steering boot 10 is fixed in a sealing manner. Further, the bellows part 11 surrounds the portion from the rack housing 2 to the outer peripheral side of the joint portion between the steering rack 1 and the tie rod 3 by the ball joint 4 and the portion reaching the end portion of the tie rod 3, thereby protecting the ball joint 4 and the periphery thereof from the muddy water and the dust.

In this case, if the high temperature atmosphere is formed by the radiant heat from the road surface or the like, the internal pressure of the steering boot 10 becomes higher on the basis of the expansion of the air. In this case, the internal pressure is uniformly applied to the inner surface of the bellows part 11. Further, since a pressure receiving area receiving the internal pressure is larger toward the large-diameter side (the first attachment part 12 side) of the bellows part 11, the expanding force in the axial direction on the basis of the internal pressure is larger toward the position close to the first attachment part 12, and the expanding force in the axial direction on the basis of the internal pressure becomes smaller toward the position close to the second attachment part 13 forming the smaller diameter.

However, since both sides in the axial direction of the bellows part 11, that is, the first attachment part 12 and the second attachment part 13 are fixed, the bellows part 11 is relatively expanded in the first attachment part 12 side, and is relatively compressed in the portion close to the second attachment part 13. Further, since the portion 11C closest to the second attachment part 13 is gradually thicker toward the second attachment part 13 side, the bellows part 11 is most compressed in the portion 11A positioned in the outer periphery of the ball joint 4.

Further, since the thickness distribution of the bellows part 11 is the same as Fig. 1, whereby the thinnest portion 11A is relatively compressed, whereby the bellows part 11 is relatively expanded in the other thicker portions 11B and 11C than the thinnest portion 11A.

Further, when the driver turns the steering wheel (not shown) from this state, whereby the tie rod 3 is angularly displaced around the ball part 41 of the ball joint 4 while the steering rack 1 moves in the axial direction, the bellows part 11 of the steering boot 10 is deformed as shown in Fig. 7 between the first attachment part 12 fixed to the rack housing 2 and the second attachment part 13 displacing together with the tie rod 3. In other words, the bellows part 11 is largely bent in the portion 11A in which the thickness t becomes thinnest, in the outer peripheral side of the ball joint 4, and the compression side inner periphery of this portion 11A is close to or brought into contact with the outer peripheral surface of the socket 42 of the ball joint 4. Further, since the portion 11B in the first attachment part 12 side is larger in the expanding force in the axial direction toward the large-diameter side on the basis of the internal pressure, the displacement in the diametrical direction is inhibited. Accordingly, it is possible to effectively prevent the portion 11B in the first attachment part 12 side from the ball joint 4 from entering into the inner peripheral side from the socket 42 so as to be caught on the corner portion 42a of the socket 42 of the ball joint 4.

Further, since the angle θ of incline which the conical surface passing through the outer diameter of the crest part 111 forms with respect to the axis is set to be gentle equal to or less than 30 degrees, it is possible to restrict the torsional stress applied to the steering boot 10 even in the case that the tie rod 3 is twisted for regulating the toe-in angle of the tire wheel (not shown), and an excellent durability can be secured.

Further, since the end walls 14 and 15 in both sides in the axial direction of the bellows part 11 are thicker than the bellows part 11 as in the same manner as the first aspect, and are reinforced by the ribs 14a and 15a, it is possible to prevent the end walls 14 and 15 from getting down due to the internal pressure so as to be damaged by the interference with the thread portions (not shown) of the metal bands 5 and 6 or the like.

## Claims

1. A steering boot, comprising a bellows part (11) where annular crest part (111) and trough part (112) are formed alternately, a first attachment part (12) formed at one end of the bellows part (11) to be tightly fixed to the outer peripheral surface of a rack housing (2) where a steering rack (1) is inserted through movably in the axial direction, and a second attachment part (13) formed at the other end of said bellows part (11) to be tightly fixed to the outer peripheral surface of a tie rod (3) jointed oscillatably to said steering rack (1) through a ball joint (4), the steering boot being **characterized by** the thickness (t) of said bellows part (11) becomes smallest in a portion (11 A) forming the outer peripheral side of the ball joint (4), and becomes gradually thicker toward the first attachment part (12) side in the portion (11B) closer to the first attachment part (12) side than the portion (11A), and the thickness becomes gradually thicker toward the second attachment part (13) side in the portion (11C) closer to the second attachment part (13) side than the portion (11A).

2. The steering boot of claim 1, **characterized in that** the radius of the crest part (111) and trough part (112) become gradually smaller from the end part on the first attachment part (12) side to the end part of the second attachment part (13) side.

3. The steering boot of claim 2, **characterized in that** the inclination angle (θ) of a conical face passing through an arbitrary crest part (111ₙ) and one (111ₙ₋₁) adjecent to the smaller diameter side thereof or a conical face passing through an arbitrary trough and a trough adjacent to the smaller diameter side thereof in respect to the axial center is made equal or inferior to 30 degrees.

## Patentansprüche

1. Lenkmanschette mit einem Balgteil (11), bei dem ringförmige Scheitelteile (111) und Talteile (112) abwechselnd ausgebildet sind, ein erster Befestigungsteil (12) an einem Ende des Balgteils (11) ausgebildet ist, um dicht an der Außenumfangsfläche eines Zahnstangengehäuses (2) befestigt zu werden, wobei eine Lenkungszahnstange (1) in Axialrichtung beweglich eingeführt ist, und ein zweiter Befestigungsteil (13) am anderen Ende des Balgteils (11) ausgebildet ist, um dicht an der Außenumfangsfläche einer Spurstange (3) befestigt zu werden, die durch ein Kugelgelenk (4) mit der Lenkungszahnstange (1) hin- und herbewegbar verbunden ist,
**dadurch gekennzeichnet, dass** die Dicke (t) des Balgteils (11) in einem die Außenumfangsseite des Kugelgelenks (4) bildenden Teil (11A) am kleinsten wird und zur Seite des ersten Befestigungsteils (12) im Teil (11B), der näher an der Seite des ersten Befestigungsteils (12) liegt als der Teil (11A) allmählich dicker wird, und die Dicke zur Seite des zweiten Befestigungsteils (13) im Teil (11C), der näher an der Seite des zweiten Befestigungsteils (13) liegt als der Teil (11A), allmählich dicker wird.

2. Lenkmanschette nach Anspruch 1, **dadurch gekennzeichnet, dass** der Radius des Scheitelteils (111) und des Talteils (112) vom Endteil auf der Seite des ersten Befestigungsteils (12) zum Endteil der Seite des zweiten Befestigungsteils (13) allmählich kleiner wird.

3. Lenkmanschette nach Anspruch 2, **dadurch gekennzeichnet, dass** der Neigungswinkel (θ) einer durch einen willkürlichen Scheitelteil (111ₙ) und einen (111ₙ₋₁) neben der Seite davon mit dem kleineren Durchmesser passierenden Kegelfläche oder einer durch ein willkürliches Tal und ein Tal neben der Seite davon mit dem kleineren Durchmesser passierenden Kegelfläche bezüglich der axialen Mitte kleiner gleich 30 Grad ist.

## Revendications

1. Soufflet de direction comprenant une partie formant soufflet (11) dans laquelle des parties formant crête annulaire (111) et des parties formant creux (112) sont formées alternativement, une première partie de fixation (12) formée à une extrémité de la partie formant soufflet (11) pour être fixée de façon étanche à la surface périphérique extérieure d'un logement de crémaillère (2) dans lequel une crémaillère (1) est insérée par déplacement dans la direction axiale, et une deuxième partie de fixation (13) formée à l'autre extrémité de ladite partie formant soufflet (11) pour être fixée de façon étanche à la surface périphérique extérieure d'une biellette de direction (3) assemblée à ladite crémaillère (1) par un joint à rotule (4) de façon à pouvoir osciller, le soufflet de direction étant **caractérisé par le fait que** l'épaisseur (t) de ladite partie formant soufflet (11) devient plus petite dans une partie (11A) formant le côté périphérique extérieur du joint à rotule (4) et devient progressivement plus épaisse en direction du côté de la première partie de fixation (12) dans la partie (11B) plus proche du côté de la première partie de fixation (12) que la partie (11A), et l'épaisseur devient progressivement plus épaisse en direction de la deuxième partie de fixation (13) dans la partie (11C) plus proche du côté de la deuxième partie de fixation (13) que la partie (11A).

2. Soufflet de direction selon la revendication 1, **caractérisé en ce que** les rayons de la partie formant crête (111) et de la partie formant creux (112) deviennent progressivement plus petits à partir de la partie d'extrémité du côté de la première partie de fixation (12) vers la partie d'extrémité du côté de la deuxième partie de fixation (13).

3. Soufflet de direction selon la revendication 2, **caractérisé en ce que** l'angle d'inclinaison (θ) d'une face conique passant par une partie formant crête arbitraire (111ₙ) et une (111ₙ₋₁) adjacente du côté de diamètre plus petit de celle-ci, ou une face conique passant par un creux arbitraire et un creux adjacent du côté de plus petit diamètre de celui-ci par rapport au centre axial, est rendu égal ou inférieur à 30 degrés.
